# FASCICULE DE BREVET EUROPEEN

(11) **EP 0 573 317 B1**
(45) Date de publication et mention de la délivrance du brevet: **16.07.1997**
(21) Numéro de dépôt: 93401082.8
(22) Date de dépôt: 26.04.1993
(51) Int. Cl.: G06F 13/37

(54) **Dispositif de gestion de la priorité d'accès à des ressources communes, de modules fonctionnels répartis dans une pluralité d'unités locales en formant dans chacune de celles-ci une "daisy chain" locale**
Gerät zur Verwaltung von Zugriffspriorität zu gemeinsamen Betriebsmitteln von unter einer Vielzahl von lokalen Einheiten verteilten Funktionsmodulen, von denen jede eine lokale "Daisy-Chain"-Schaltung formt
Apparatus for controlling access priority to common resources of functional modules distributed among a plurality of local units, each one of them forming a local daisy chain

(30) Priorité: 21.05.1992 FR 9206179
(43) Date de publication de la demande: 08.12.1993
(73) Titulaire: AEROSPATIALE SOCIETE NATIONALE INDUSTRIELLE, Société Anonyme, 75781 Paris Cedex 16 (FR)
(72) Inventeur: Cahen, François, F-92350 le Plessis Robinson (FR)
(74) Mandataire: de Saint-Palais, Arnaud Marie

(56) Documents cités:
- EP-A- 0 265 574
- WO-A-84/04185
- US-A- 4 374 413

## Description

La présente invention concerne un dispositif de gestion de la priorité d'accès à des ressources communes, de modules fonctionnels répartis dans une pluralité d'unités locales en formant dans chacune de celles-ci, une "daisy chain" locale.

Elle s'applique notamment, mais non exclusivement, à l'interconnexion de plusieurs bacs renfermant chacun, un nombre limité de modules ou cartes d'instrumentation.
Les modules de chaque bac sont interconnectés selon le principe de la "daisy chain", offrant ainsi une gestion de la priorité des modules du bac pour accéder à des ressources disponibles en local.
Lorsque le nombre de modules à mettre en oeuvre dépasse la capacité d'un seul bac, il devient nécessaire d'utiliser plusieurs bacs interconnectés.

Une première solution consiste à interconnecter les "daisy chains" de tous les bacs de façon à ne former qu'une seule "daisy chain".
Si la mise en oeuvre de la "daisy chain" nécessite d'établir une communication entre modules, cette solution présente l'inconvénient de mobiliser les voies de communication de tous les bacs.

Une autre solution consiste à faire intervenir un dispositif d'arbitrage qui interroge successivement tous les bacs activant ainsi la "daisy chain" de chaque bac pour déterminer le bac demandeur. Cette solution présente l'inconvénient dêtre plus coûteuse en temps du fait que la recherche du module demandeur le plus prioritaire demande plusieurs interrogations.

L'invention a pour but de supprimer ces inconvénients.

Elle propose, d'une façon générale, un dispositif de gestion de la priorité d'accès à des ressources communes de modules fonctionnels répartis dans une pluralité d'unités locales qui forment dans chacune desdites unités, une "daisy chain" locale dans laquelle chaque module fonctionnel comprend un commutateur relié en série aux commutateurs des modules précédents et / ou suivants de la chaîne, ce commutateur présentant au moins deux états :
- un état fermé dans lequel il referme la chaîne en l'absence de demande émanant du module dans lequel il se trouve et
- un état ouvert dans lequel il interrompt la chaîne lorsqu'à la suite d'une demande, le module est dans l'attente d'une réponse émise par le premier module de la chaîne qui reçoit les demandes et a une fonction d'arbitre.

Selon l'invention, ce dispositif est caractérisé en ce que :
- les unités locales sont interconnectées de manière à former une "daisy chain" externe fonctionnant sur un principe similaire à celui de la "daisy chain" locale,
- chaque unité locale comprend un coupleur ayant pour fonction:
   . soit d'assurer la continuité de la "daisy chain" externe lorsqu'aucun module de l'unité locale n'est demandeur,
   . soit d'interrompre la "daisy chain" externe et de la connecter à la "daisy chain" locale lorsqu'un module de l'unité locale en a fait la demande et réciproquement, lorsqu'un module de l'unité locale a demandé une ressource disponible dans une autre unité locale.

Un mode d'exécution de l'invention sera décrit ci-après, à titre d'exemple non limitatif, avec référence aux dessins annexés en lesquels :
La figure 1 est une représentation schématique d'une "daisy chain" formée par un ensemble de modules montés dans un même bac B ;
La figure 2 est le schéma de principe du dispositif de commutation permettant à chaque module d'agir sur la "daisy chain" ;
La figure 3 est le schéma de principe du dispositif de couplage permettant l'interconnexion de plusieurs bacs ;
La figure 4 est le schéma de principe de l'interconnexion de plusieurs bacs en "daisy chain" à l'aide de dispositifs de couplage correspondant à l'invention ; et
La figure 5 représente schématiquement un exemple de bus dont la structure correspond sensiblement au bus VME et sa connexion avec un module ou avec un dispositif de couplage.

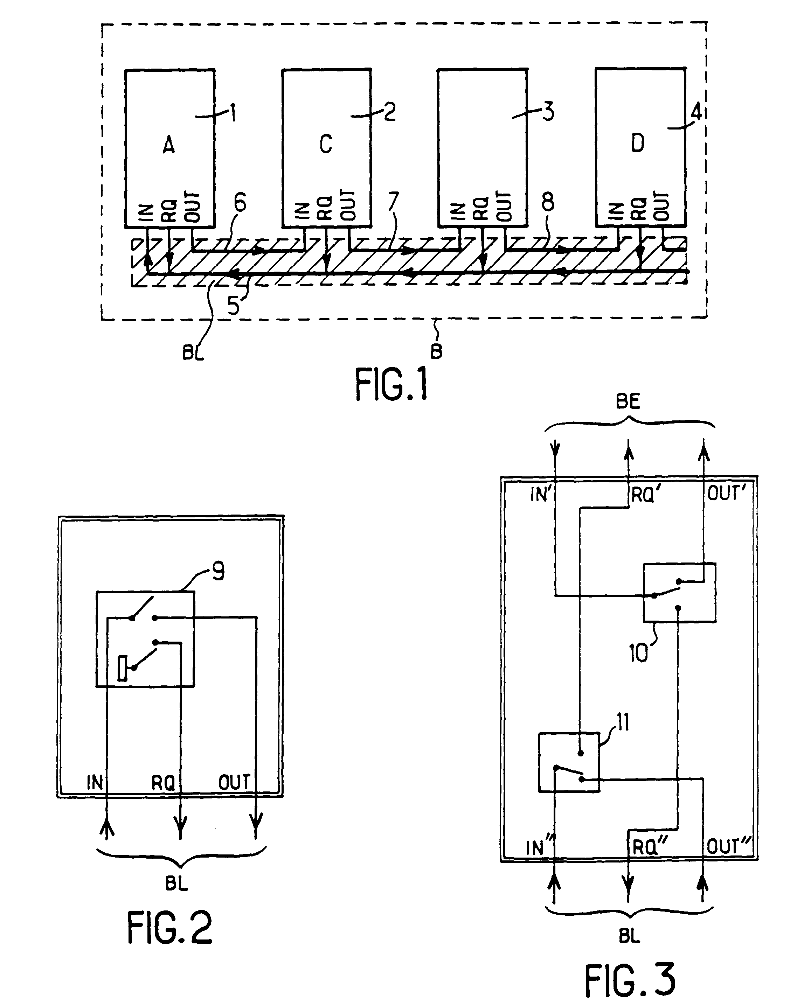

Un bac B tel que représenté par la figure 1 contient plusieurs modules (1, 2, 3, 4) interconnectés en "daisy chain" par le bus local BL (indiqué en traits interrompus).

Chaque module comprend au moins trois bornes IN, RQ et OUT de connexion avec les autres modules.

Le bus local BL est constitué d'au moins deux lignes .
La première ligne 5 relie les bornes RQ de chaque module à la borne IN du module A situé en début de chaîne et jouant le rôle d'arbitre. Cette ligne est utilisée pour transmettre les demandes émanant des modules 2, 3 et 4 à l'arbitre A.

La deuxième ligne constituée des éléments 6, 7, 8 relie la borne OUT de chaque module à la borne IN du module suivant, et forme ainsi la chaîne. Cette ligne est utilisée pour transmettre les autorisations émanant du module arbitre A aux autres modules de la chaîne.

Chaque module est muni d'un dispositif de commutation tel que représenté par la figure 2 constitué d'un double commutateur 9 présentant au moins 2 états :
- un état fermé dans lequel la borne IN est reliée à la borne OUT, et la borne RQ est ouverte indiquant au module arbitre A que le module n'a pas effectué de requête et
- un état ouvert dans lequel la borne IN n'est pas connectée à la borne OUT et un signal est envoyé sur la borne RQ indiquant au module arbitre A que le module est demandeur.

Le fonctionnement de la "daisy chain" peut se décrire de la manière suivante :
lorsqu'un module effectue une demande en envoyant un signal sur sa borne RQ, son dispositif de commutation 9 prend l'état ouvert. Le module arbitre A reçoit cette demande et, s'il décide de la satisfaire, il envoie un signal sur sa borne OUT. Ce signal est alors reçu et retransmis par chaque module de la chaîne jusqu'au premier module qui a ouvert la chaîne et donc effectué une requête.

Ainsi, le module le plus prioritaire, c'est-à-dire le module servi en premier, correspond au demandeur situé le plus proche du module arbitre A.

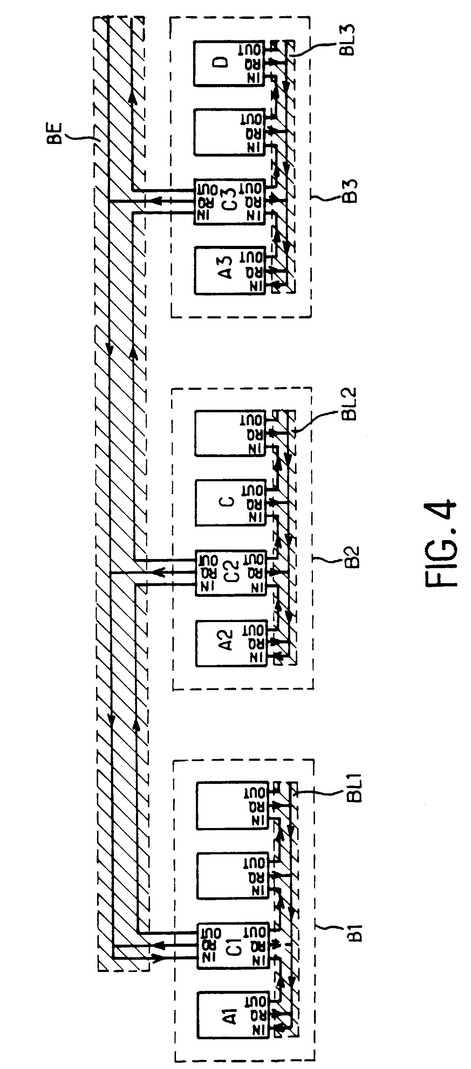

La figure 4 représente trois bacs B1, B2, B3 similaires au bac B représenté par la figure 1, interconnectés de manière à former une "daisy chain" analogue à celle représentée par la figure 1.
Pour cela chaque bac doit disposer d'un dispositif de couplage C1, C2, C3 qui permet de relier les bus locaux BL1, BL2 et BL3 de chaque bac au bus externe BE (indiqué en traits interrompus) pour assurer la continuité entre les "daisy chains" locales et la "daisy chain" externe lorsque cela s'avère nécessaire.
Selon le schéma représenté par la figure 4, chaque dispositif de couplage se comporte vis à vis du bus externe BE d'une façon similaire à un module d'un bac vis à vis de son bus local.
Comme le coupleur C1 est situé en début de chaîne vis à vis du bus externe BE, il va jouer également le rôle d'arbitre du bus BE.

Le dispositif de couplage tel que représenté par la figure 3 est composé de deux commutateurs 10 et 11.
Le commutateur 10 permet de relier la borne IN' connectée au bus externe BE :
- soit à la borne OUT' connectée au même bus lorsque le bac n'est pas destinataire,
- soit à la borne RQ" connectée au bus local BL du bac dans le cas contraire.

Le commutateur 11 permet de relier la borne IN" connectée au bus local BL :
- soit à la borne OUT" connectée au même bus en vue d'assurer la continuité de la "daisy chain" activée sur le bus local BL
- soit à la borne RQ' connectée au bus externe BE lorsqu'un module du bac contenant le coupleur a émis une demande à destination d'un module situé dans un autre bac.

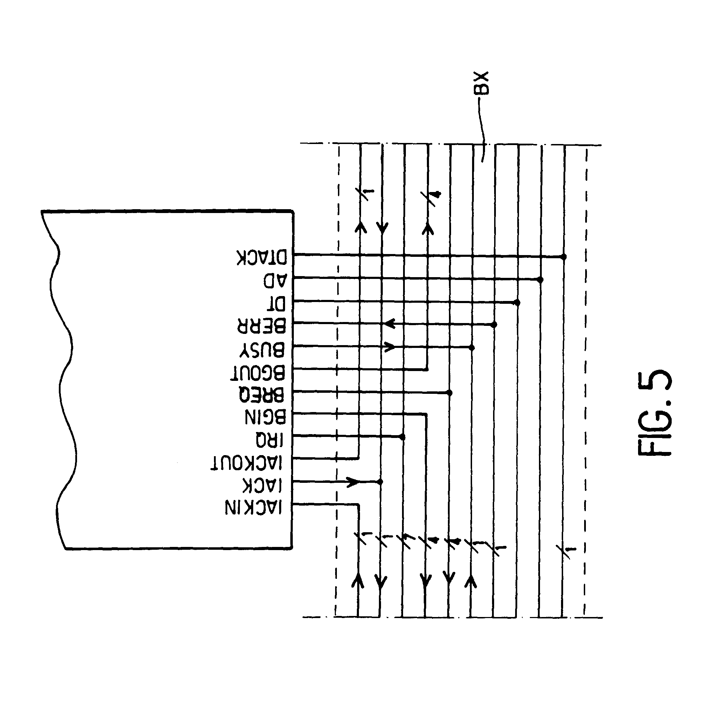

Le bus BX représenté par la figure 5 permet de constituer cinq "daisy chains" :
- une première "daisy chain" à l'aide des bornes IACKIN, IACK et IACKOUT pouvant être affectée à la transmission des acquittements d'interruption et,
- quatre autres "daisy chains" à l'aide des bornes BGIN, BREQ et BGOUT, chacune de ces bornes étant constituées de 4 fils pouvant être affectées au transfert des demandes BREQ et des autorisations d'accès BGIN, BGOUT au bus BX.

Il regroupe également les 7 lignes IRQ de demande d'interruption, la ligne BUSY permettant d'indiquer que le bus est occupé, la ligne BERR indiquant qu'une erreur a été détectée sur le bus, la ligne DTACK permettant de valider un transfert de données, ainsi que les lignes utilisées au transfert de données DT et au transfert d'adresses AD.

Le principe énoncé par l'invention est particulièrement utile à l'acquittement des interruptions dans un système composé de bacs représentés par la figure 4, interconnectés par un bus externe BE du type représenté par la figure 5 et contenant chacun un ensemble de modules interconnectés par un bus local du même type.

Dans un tel système, lorsqu'un module D demande une interruption, deux cas peuvent se produire :
- soit le module contrôleur C de l'interruption demandée se trouve dans le même bac que le module demandeur D tel que représenté par la figure 1,
- soit le module contrôleur C se trouve dans un autre bac que le module demandeur D tel que représenté par la figure 4.

Le processus d'acquittement de l'interruption se déroule de la manière suivante :
dans les deux cas, le module contrôleur C de l'interruption activée demande l'accès au bus local BL en émettant un signal sur une des quatre lignes BREQ du bus BL.
Ce signal arrive directement au module arbitre A situé en début de chaîne dans le bac.
Lorsque le module arbitre A décide d'accorder l'accès au bus, il envoie un signal sur la borne BGOUT correspondant à la ligne BREQ utilisée pour la demande.
Ce signal est reçu sur la borne BGIN correspondante et est retransmis par la borne BGOUT par chaque module du bac jusqu'au premier module demandeur du bus BL, suivant l'ordre dans lequel ils apparaissent dans la chaîne.

Lorsque le module contrôleur C de l'interruption reçoit l'autorisation d'accès au bus, il le déclare occupé en émettant un signal sur la ligne BUSY du bus et écrit le numéro de l'interruption (de 1 à 7) sur les lignes de transfert d'adresses AD du bus.
Il active en même temps le signal IACK d'acquittement d'interruption qui arrive directement au module arbitre A sur la borne IACKIN.

L'arbitre A active la "daisy chain" associée au signal IACK en envoyant un signal sur sa borne IACKOUT connectée au bus local BL vers le module suivant dans la chaîne.
Le processus de transmission du signal IACK est analogue à celui utilisé pour la transmission de l'autorisation de l'accès au bus.

Dans le premier cas, c'est-à-dire, si le demandeur de l'interruption se trouve dans le même bac, le signal IACKIN est finalement reçu par le demandeur D de l'interruption, dont le numéro figure sur les lignes d'adresse AD du bus, situé le plus proche de l'arbitre A dans la chaîne.
Le module demandeur D de l'interruption présente alors le vecteur de l'interruption sur les lignes de transfert de données du bus BL qu'il valide par le signal DTACK, permettant ainsi au contrôleur C de déclarer le bus libre en émettant le signal correspondant sur la ligne BUSY du bus BL.

Ce processus correspond à celui défini par la norme VME.

Dans le second cas, lorsque le module contrôleur C de l'interruption ne se trouve pas dans le même bac que le module demandeur D qui a activé l'interruption, le signal IACKIN est reçu par le module coupleur C2 du bac B2 où se trouve le module contrôleur C, qui adopte alors le même comportement vis à vis du bus externe BE que celui d'un contrôleur d'interruption :

le module coupleur C2 demande l'accès au bus externe BE en envoyant un signal sur la borne BREQ du bus BE reçu directement par le module arbitre C1 du bus BE. Lorsque celui-ci a décidé d'autoriser l'accès au bus BE, il active la "daisy chain" d'autorisation d'accès au bus BE entre les modules coupleurs de chaque bac en envoyant un signal sur la borne BGOUT connectée au bus BE.

Lorsque le module coupleur C2 reçoit l'autorisation d'accès au bus BE, il le déclare occupé en envoyant un signal sur la ligne BUSY, transfère le numéro d'interruption des lignes de transfert d'adresse AD du bus local BL2 vers les lignes de transfert d'adresse AD du bus BE, envoie le signal IACK sur le BUS BE et se met en attente du vecteur de l'interruption.

Le signal IACK arrive alors directement au module arbitre C1 via le bus externe BE. Suivant que le module demandeur de l'interruption se trouve dans le bac B1 ou non, le module coupleur et arbitre C1 envoie le signal IACK, soit sur le bus local BL1, soit sur le bus externe BE.

Lorsque le module coupleur C3 du bac B3, contenant le module demandeur D, reçoit le signal IACKIN, il se comporte comme le demandeur de l'interruption vis à vis du bus externe BE et comme le contrôleur vis à vis du bus local BL3 :
il demande l'accès au bus BL3 en émettant un signal sur une des quatre lignes BREQ qui arrive directement au module arbitre A3. Lorsque le module A3 a décidé d'accorder l'accès au bus BL3, il envoie un signal sur la borne BGOUT correspondante.
Lorsque le module C3 reçoit un signal sur sa borne BGIN correspondant à la ligne BREQ activée, il déclare le bus BL3 occupé en émettant un signal sur la ligne BUSY du même bus , transfère le numéro de l'interruption du bus BE vers le bus BL3, et, envoie un signal sur la ligne IACK du bus BL3 pour transmettre l'acquittement de l'interruption.

Le signal IACK est alors reçu directement par le module A3 qui active alors la "daisy chain" associée sur le bus BL3.
Lorsque le module demandeur D de l'interruption reçoit le signal IACK correspondant à l'interruption qu'il a demandée, il présente le vecteur de l'interruption sur les lignes de transfert de données DT du bus BL3 qu'il valide par le signal DTACK permettant ainsi au contrôleur C de déclarer le bus libre en envoyant le signal correspondant sur la ligne BUSY.

Le module coupleur C3 transfère le vecteur de l'interruption du bus local BL3 au bus externe BE.

Le module coupleur C2 transfère alors le vecteur de l'interruption du bus externe BE au bus local BL2 qu'il valide en émettant le signal DTACK.

Un avantage important de l'invention telle que précédemment décrite, consiste en ce que, durant l'acquittement par un contrôleur d'une interruption activée par un demandeur situé dans un autre bac, seuls les bus locaux aux deux bacs concernés ont été occupés. Le fonctionnement local des autres bacs n'a, par conséquent, pas été interrompu.

## Revendications

1. Dispositif de gestion de la priorité d'accès à des ressources communes de modules fonctionnels répartis dans une pluralité d'unités locales qui forment dans chacune desdites unités, une "daisy chain" locale dans laquelle chaque module fonctionnel comprend un commutateur (9) relié en série aux commutateurs des modules précédents et / ou suivants de la chaîne, ce commutateur (9) présentant au moins deux états :
- un état fermé dans lequel il referme la chaîne en l'absence de demande émanant du module dans lequel il se trouve et
- un état ouvert dans lequel il interrompt la chaîne lorsqu'à la suite d'une demande, le module est dans l'attente d'une réponse émise par le premier module de la chaîne qui reçoit les demandes et a une fonction d'arbitre,
caractérisé en ce que, d'une part les unités locales sont interconnectées de manière à former une "daisy chain" externe fonctionnant sur un principe similaire à celui de la "daisy chain" locale, et d'autre part, chaque unité locale (B1, B2, B3) comprend un coupleur ayant pour fonction, soit d'assurer la continuité de la "daisy chain" externe lorsqu'aucun module de l'unité locale n'est demandeur, soit d'interrompre la "daisy chain" externe et de la connecter à la "daisy chain" locale lorsqu'un module de l'unité locale en a fait la demande et réciproquement, lorsqu'un module de l'unité locale a demandé une ressource disponible dans une autre unité locale.

2. Dispositif selon la revendication 1 caractérisé en ce que le susdit coupleur fait partie d'un module fonctionnel de la "daisy chain" locale et comprend le susdit commutateur (9) de ce module fonctionnel.

3. Dispositif selon l'une des revendications 1 et 2 caractérisé en ce que les demandes émanant des modules fonctionnels (1, 2, 3, 4) d'une même unité locale (B) sont transmises au module fonctionnel (1) situé en tête de la "daisy chain" locale par l'intermédiaire d'une ligne locale (5) interne à la susdite unité locale (B).

4. Dispositif selon l'une des revendications 1 et 2 caractérisé en ce que les demandes émanant des coupleurs (C1, C2, C3) situés dans les unités locales sont transmises au coupleur (C1) de l'unité locale (B1) située en tête de la "daisy chain" externe par l'intermédiaire d'une ligne externe aux unités locales.

5. Dispositif selon l'une des revendications précédentes caractérisé en ce que le susdit coupleur comprend deux commutateurs (10, 11), à savoir, un commutateur (10) qui permet de relier une borne IN' connectée à la "daisy chain" externe, soit à une borne OUT' connectée à la même "daisy chain" lorsque l'unité fonctionnelle n'est pas destinataire, soit à une borne RQ" connectée à la susdite ligne locale de l'unité fonctionnelle dans le cas contraire, et un commutateur (11) qui permet de relier une borne IN" connectée à la "daisy chain" locale, soit à une borne OUT" connectée à la même "daisy chain" en vue d'assurer la continuité de la "daisy chain" locale, soit à une borne RQ' connectée à la susdite ligne externe lorsqu'un module de l'unité fonctionnelle, contenant le susdit dispositif de couplage, a émis une demande à destination d'un module situé dans une autre unité fonctionnelle.

6. Dispositif selon les revendications précédentes caractérisé en ce que les modules fonctionnels d'une même unité locale peuvent être interconnectés de façon à former plusieurs "daisy chains" locales en parallèle couplées chacune à une "daisy chain" externe par l'intermédiaire du dispositif de couplage, chaque "daisy chain" locale et externe ayant sa propre ligne de transmission des demandes au module situé en tête de chaîne, permettant ainsi de traiter simultanément plusieurs types de demandes.

## Patentansprüche

1. Vorrichtung zur Verwaltung der Zugriffspriorität zu gemeinsamen Ressourcen funktionaler Moduln, die in einer Vielzahl von lokalen Einheiten verteilt sind und in jeder dieser Einheiten eine lokale Daisy Chain bilden, in der jeder funktionale Modul einen Schalter (9) aufweist, der in Reihe mit den Schaltern der vorhergehenden und/oder nachfolgenden Moduln der Kette verbunden ist, wobei dieser Schalter (9) mindestens zwei Zustände aufweist:
- einen geschlossenen Zustand, in dem er in Abwesenheit einer Anforderung von dem Modul, in dem er sich befindet, die Kette schließt, und
- einen offenen Zustand, in dem er die Kette unterbricht, wenn aufgrund einer Anforderung der Modul eine Antwort erwartet, die vom ersten Modul der Kette ausgegeben wird, der die Anforderungen empfängt und eine Arbiter-Funktion hat, dadurch gekennzeichnet, daß einerseits die lokalen Einheiten so miteinander gekoppelt sind, daß sie eine externe Daisy Chain bilden, die gemäß einem Prinzip ähnlich dem der lokalen Daisy Chain funktioniert, und andererseits jede lokale Einheit (B1, B2, B3) einen Koppler enthält, der als Funktion hat, entweder die Kontinuität der externen Daisy Chain zu gewährleisten, wenn kein Modul der lokalen Einheit anfordernd ist, oder die externe Daisy Chain zu unterbrechen und sie mit der lokalen Daisy Chain zu verbinden, wenn ein Modul der lokalen Einheit diese Anforderung gestellt hat, und umgekehrt, wenn ein Modul der lokalen Einheit eine Ressource angefordert hat, die in einer anderen lokalen Einheit zur Verfügung steht.

2. Vorrichtung nach Anspruch 1, dadurch gekennzeichnet, daß der Koppler Teil eines funktionalen Moduls der lokalen Daisy Chain ist und den Schalter (9) dieses funktionalen Moduls enthält.

3. Vorrichtung nach einem der Ansprüche 1 und 2, dadurch gekennzeichnet, daß die von den funktionalen Moduln (1, 2, 3, 4) einer lokalen Einheit (B) kommenden Anforderungen über eine lokale Leitung (5) innerhalb der lokalen Einheit (B) zum funktionalen Modul (1) übertragen werden, der sich am Anfang der lokalen Daisy Chain befindet.

4. Vorrichtung nach einem der Ansprüche 1 und 2, dadurch gekennzeichnet, daß die von den in den lokalen Einheiten angeordneten Kopplern (C1, C2, C3) kommenden Anforderungen über eine außerhalb der lokalen Einheiten liegende Leitung zum Koppler (C1) der lokalen Einheit (B1) übertragen werden, die sich am Anfang der externen Daisy Chain befindet.

5. Vorrichtung nach einem der vorhergehenden Ansprüche, dadurch gekennzeichnet, daß der Koppler zwei Schalter (10, 11) aufweist, d.h. einen Schalter (10), der es erlaubt, eine mit der externen Daisy Chain verbundene Klemme IN' entweder mit einer mit der gleichen Daisy Chain verbundene Klemme OUT' zu verbinden, wenn die funktionale Einheit nicht Zieleinheit ist, oder im gegenteiligen Fall mit einer mit der lokalen Leitung der funktionalen Einheit verbundene Klemme RQ" zu verbinden, und einen Schalter (11), der es erlaubt, eine mit der lokalen Daisy Chain verbundene Klemme IN" entweder mit einer mit der gleichen Daisy Chain verbundene Klemme OUT" zur Gewährleistung der Kontinuität der lokalen Daisy Chain, oder mit einer mit der externen Leitung verbundene Klemme RQ' zu verbinden, wenn ein Modul der funktionalen Einheit, die die Kopplervorrichtung enthält, eine Anforderung an einen Modul gesendet hat, der sich in einer anderen funktionalen Einheit befindet.

6. Vorrichtung nach einem der vorhergehenden Ansprüche, dadurch gekennzeichnet, daß die funktionalen Moduln der gleichen lokalen Einheit miteinander so gekoppelt sein können, daß sie mehrere parallelgeschaltete lokale Daisy Chains bilden, die je mit einer externen Daisy Chain über die Kopplervorrichtung verbunden sind, wobei jede lokale und externe Daisy Chain ihre eigene Leitung zur Übertragung der Anforderungen zum Modul aufweist, der sich am Kopf der Kette befindet, wodurch gleichzeitig verschiedene Arten von Anforderungen verarbeitet werden können.

## Claims

1. A device managing the accessing priority to common resources of functional modules divided over a plurality of local units forming, in each of said units, a local daisy chain in which each functional module comprises a switch (9) connected serially to the switches of the previous and / or next modules in said chain, this switch (9) having at least two statuses:
- a closed status in which it closes said chain when there is no request from the module in which it is situated, and
- an open status in which it interrupts said chain when, subsequent to a request, the module is awaiting a reply transmitted by the first module in said chain which receives the requests and acts as arbiter,
characterized in that, on the one hand, said local units are interconnected so as to form an external daisy chain operating according to a principle similar to that of said local daisy chain, and, on the other hand, each local unit (B1, B2, B3) comprises a coupler having as function either to ensure the continuity of the external daisy chain when none of the modules in said local unit has made a request, or to interrupt said external daisy chain and connect it to said local daisy chain when a module in the local unit so requests, and reciprocally, when a module in the local unit has requested a resource available in another local unit.

2. The device a claimed in claim 1, characterized in that said coupler is part of a functional module in said local daisy chain and comprises said switch (9) of said functional module.

3. The device as claimed in one of claims 1 and 2, characterized in that the requests from said functional modules (1, 2, 3, 4) of a same local unit (B) are transmitted to the functional module (1) situated at the head of said local daisy chain by means of a local line (5) inside said local unit (B).

4. The device as claimed in one of claims 1 and 2, characterized in that the requests from said couplers (C1, C2, C3) situated in said local units are transmitted to the coupler (C1) of the local unit (B1) situated at the head of said external daisy chain by means of a line outside said local units.

5. The device as claimed in one of the preceding claims, characterized in that said coupler comprises two switches (10, 11), namely, a switch (10) enabling an IN' terminal connected to said external daisy chain to be connected, either to an OUT' terminal connected to the same daisy chain when said functional unit is not the destination, or to an RQ" terminal connected to said local line of said functional unit in the other case, and a switch (11) enabling an IN" terminal connected to said local daisy chain to be connected, either to an OUT" terminal connected to the same daisy chain in order to ensure the continuity of said local daisy chain, or to an RQ' terminal connected to said external line when a module of said functional unit containing said coupling device has submitted a request destined for a module situated in another functional unit.

6. The device as claimed in the preceding claims, characterized in that the functional modules of a same local unit can be interconnected so as to form several local daisy chains in parallel each coupled to an external daisy chain by means of said coupling device, each local and external daisy chain having its own line for transmission of the requests to the module situated at the head of the chain, thereby enabling several types of requests to be processed simultaneously.
